# EUROPEAN PATENT APPLICATION

(11) **EP 2 554 228 A1**
(43) Date of publication of application: **06.02.2013**
(21) Application number: 11761930.4
(22) Date of filing: 27.01.2011
(51) Int. Cl.: B01D 3/26, B01D 3/14, C10G 7/02

(54) **CROSS-FLOW AND BAFFLED-FLOW COMPOSITE GASOLINE FRACTIONATOR OF ETHYLENE PRODUCTION EQUIPMENT**

(30) Priority: 31.03.2010 CN 201010136599
(71) Applicant: Tianjin Univtech Co., Ltd, Nankai District, Tianjin 300372 (CN)
(72) Inventor: ZHAO, Ruwen, Tianjin 300372 (CN)
(74) Representative: Larcher, Dominique
(86) International application number: PCT/CN2011/070724
(87) International publication number: WO 2011/120356

(57) **Abstract**

The invention discloses a dual-flow-baffle compound gasoline fractionator of ethylene unit, a quench oil circulation section is provided with micro baffles which are arranged in parallel in the vertical direction at intervals, a vertex angle of the micro baffle ranges from 90 to 139 degrees, symmetrical bevel edges at two sides of the vertex angle of the micro baffle are provided with symmetrical vertical hems, a medium oil circulation section is provided with dual-flow trays which are arranged in the vertical direction and have meshes with the diameter ranging from Φ 18 to 24mm, a diesel oil separation section is provided with dual-flow trays which are arranged in the vertical direction and have meshes with the diameter ranging from Φ13 to 24mm, and a gasoline separation section is provided with dual-flow trays which are arranged in the vertical direction and have meshes with the diameter ranging from Φ13 to 18mm. The gasoline fractionator overcomes the frequent problem of polymer plugging in current plate-type fractionator, and has the prominent advantages of strong impact vibration resistance, reduced pressure of entire tower, high ethylene yield, outstanding energy-saving effect and being capable of ensuring long-term stable operation of this tower.

## Description

### Technical Field

The invention belongs to chemical separation equipment, and more particularly to a dual-flow-baffle compound gasoline fractionator of ethylene unit.

### Background Art

Being leading equipment of ethylene unit, gasoline fractionator has become a symbolic embodiment of the level of chemical separation technology.

The current plate-type gasoline fractionator consists of a quench oil circulation section, a medium oil circulation section, a diesel oil separation section and a gasoline separation section, the quench oil circulation section is composed of nozzle-type liquid distributors, three-dimensional compound guide-type inlet initial distributors and a large-scale baffle or an angle steel tower tray or a medium-mesh ripple dual-flow tray (Φ12mm, similarly hereinafter), the medium oil circulation section is composed of nozzle-type liquid distributors, high-circulation oil collecting tanks and a fixed valve tower tray or an angle steel tower tray or a medium-mesh ripple dual-flow tray, the diesel oil separation section is composed of a fixed valve tower tray or a medium-mesh ripple dual-flow tray, and the gasoline separation section is composed of nozzle-type liquid distributors and a fixed valve tower tray or a medium-mesh ripple dual-flow tray.

At present, the plate-type gasoline fractionator is impacted by the following major problems throughout the world: as the diesel oil separation section is just positioned in a polymerization zone, plugging of liquid distributor or tower tray caused by polymers occurs quite often; and plugging of heat exchanger, liquid distributor or tower tray is often caused by coking matters resulted from cracking on the quench oil circulation section.

In order to avoid the plugging described above to further advantage long-term operation, technological measures such as the addition of polymerization inhibitor, antioxidant and the like are adopted domestically and overseas in most cases, achieving great efficiency but costing tremendous expenditure, furthermore, many domestic plugging accident still occurs.

### Summary of Invention

The invention aims at disclosing a dual-flow-baffle compound gasoline fractionator of ethylene unit, which has the prominent characteristics of anti-plugging, energy conservation and effectiveness enhancement.

In order to achieve the above purpose, the following technical proposal is adopted: a dual-flow-baffle compound gasoline fractionator of ethylene unit comprises a tower body as well as an orifice and instruments thereof, the functional sections of the tower body are a quench oil circulation section comprising nozzle-type liquid distributors and three-dimensional compound guide-type inlet initial distributors, a medium oil circulation section comprising nozzle-type liquid distributors and high-circulation oil collecting tanks, a diesel oil separation section, and a petroleum separation section comprising nozzle-type liquid distributors, and the dual-flow-baffle compound gasoline fractionator of ethylene unit is characterized in that: micro baffles, which are arranged in parallel in the vertical direction at intervals, are arranged between the nozzle-type liquid distributors and the three-dimensional compound guide-type inlet initial distributors of the quench oil circulation section, a vertex angle of the micro baffle ranges from 90 to 139 degrees, symmetrical bevel edges at two sides of the vertex angle of the micro baffle are provided with symmetrical vertical hems, the length of the symmetrical bevel edges ranges from 80 to 200mm and the length of the vertical hems ranges from 10 to 40mm; dual-flow trays, which are arranged in the vertical direction and have meshes with the diameter ranging from Φ18 to 24mm, are arranged between the nozzle-type liquid distributors and the high-circulation oil collecting tanks of the medium oil circulation section; dual-flow trays, which are arranged in the vertical direction and have meshes with the diameter ranging from Φ13 to 24mm, are arranged on the diesel oil separation section; and dual-flow trays, which are arranged in the vertical direction and have meshes with the diameter ranging from Φ13 to 18mm, are arranged below the nozzle-type liquid distributors of the petroleum separation section.

The following technical measures may also be adopted in the invention:
The micro baffles arranged equidistantly have the free section rate of 50±5% and the interlayer spacing ranging from 300 to 600mm.

The quench oil circulation section is provided with 10 to 16 layers of micro baffles which are arranged in parallel in the vertical direction at intervals.

The micro baffles are supported by a space truss, the space truss is provided with a foundation beam on which pillars are distributed at intervals, both layering and horizontal support of X-direction cross beams and Y-direction cross beams are realized between the pillars and between the pillars on the periphery and the tower body, and the Y-direction cross beams of all layers horizontally support the micro baffles.

The percentage of open area of the dual-flow tray is from 15 to 30%.

8 to 10 layers of the dual-flow trays of the medium oil circulation section are arranged in the vertical direction.

3 to 5 layers of the dual-flow trays of the diesel oil separation section are arranged in the vertical direction.

7 to 10 layers of the dual-flow trays of the gasoline separation section are arranged in the vertical direction.

The dual-flow trays arranged in the vertical direction are supported by a one-bracket-supporting-multi-tray trussed beam, a middle parallel chord parallel to an upper parallel chord and a lower parallel chord is arranged between the upper parallel chord and the lower parallel chord which are both parallel to the trussed beam, and the side-by-side middle parallel chords are positioned symmetrically; the upper and lower parallel chords and the middle parallel chords are composed of symmetrical section steels jointed side by side, rectangular chord plates are respectively fixedly clamped between the section steels jointed side by side, a vertical rod and an oblique rod are fixedly welded at two sides of the rectangular chord plate respectively, and the parallel upper and lower parallel chords and the middle parallel chords horizontally support the dual-flow trays respectively.

The invention has the advantages that: the gasoline fractionator of ethylene unit is provided with the micro baffles at the quench oil circulation section thereof and adopts medium-mesh ripple dual-flow trays, having meshes with the diameter of Φ12mm larger than that of the meshes of current relevant functional sections, for the medium oil circulation section, a diesel oil separation section and a gasoline separation section, thus the gasoline fractionator embodies the following prominent effects:
1. The known self-cleaning function of the dual-flow tray is sufficiently utilized and polymer plugging occurring frequently on the location of the dual-flow tray, the diesel oil separation section in particular is overcome. The self-cleaning function of the dual-flow tray mainly reflects that: (1) the tower tray formed by the dual-flow trays is featured by gas-liquid counter flow, and the impact and stirring of gas liquid enable solids in liquid to be uniformly mixed and to lift as the liquid flow lifts, thereby avoiding the plugging resulted from sediments. (2) the liquid on the tower tray formed by the dual-flow trays moves only axially instead of gas-liquid cross flow, and is even free from residence area and dead space, thereby avoiding the plugging resulted from the accumulation of solids. (3) the selected diameter ranges of the meshes in the invention are respectively from Φ13 to 18mm (medium-mesh) and from Φ18 to 24mm (large-mesh), so the anti-plugging capability thereof is superior to the current common ripple dual-flow trays with the diameter of Φ12mm. (4) owing to the larger area of the meshes of the dual-flow tray in the invention, the solids in the liquid hardly result in bridging plugging of the meshes under the action of airflow impact, so the anti-plugging capability thereof is superior to the current common floating valve structure or fixed valve structure.
2. The pressure of the gasoline fractionator is further reduced, particularly, by about 50% compared with the pressure of floating valve or fixed valve tower tray, for example, the overall pressure drop of a Φ12600 gasoline fractionator introduced by one-million-ton ethylene device is about 20KPa after the proposal of fixed valve dual-flow tray is adopted, while the overall pressure drop of the experimental tower of the same specification is less than 10KPa. It can be estimated according to the known common knowledge in this art, i.e. 150Kw of power can be saved per hour by 1KPa of the pressure drop and the yield of ethylene increases by 0.1%, that the experimental tower saves 1500Kw of power per hour and the yield of ethylene increases by 1%, i.e. 10000 tons.
3. Since the spaces between the large-mesh dual-flow trays has the function of raining, the total mass transfer and heat transfer efficiencies of the invention are superior to those of overflow-type tower tray. Practical tests have shown that, the temperature drop of each large-mesh dual-flow tray on the diesel oil separation section of the experimental tower of the invention is about 8 to 10□, which serves to signify the outstanding mass transfer and heat transfer efficiencies of the gasoline fractionator of the invention.

According to the invention, the micro baffles for the quench oil circulation section are products derived from the optimal combination of current large, middle baffles (compared with the micro baffles) and angle steel tower tray, and in addition to strong anti-plugging capability and lower pressure drop same as the large and middle baffle, the micro baffle also includes the direct heat transfer and indirect heat transfer efficiencies remarkably higher than those of the large and middle baffle. First of all, the number of the used micro baffles at each layer is several times as much as that of the large and middle baffles, so the times of direct gas-liquid contact of the micro baffles is several times as much as that of the large and middle baffles; furthermore, the vertical hems, which are arranged at two sides of the vertex angle of the micro baffle, not only enhance the rigidness of the micro baffles, but also plays the role of flow guide.

In addition, the dual-flow trays of the invention are supported by a one-bracket-supporting-multi-tray trussed beam having the rigidness much stronger than conventional trussed beam, therefore, not only the purpose that multilayered tower trays are supported by one beam can be reached, the technical requirement that the levelness of large-diameter tower tray is not more than 3mm and the design requirement that the height of main beams of tower trays of all layers is smaller than 30% of plate spacing can also be met. Proved by experiments, the trussed beam causes no inference to the liquid on the tower tray and no influence to uniform distribution of gas, and is favorable for the enhancement of plate efficiency. Also, proved by experiments, the trussed beam has quite strong impact vibration resistance. The trussed beam can obviously lower the entire cost of tower in contrast to the current multilayered tower tray structure.

The micro baffles of the invention are supported by a space truss, therefore, the purpose of supporting a plurality of layers of the micro baffles can be reached, moreover, the gasoline fractionator has the prominent advantage of strong resistance to the impact of high-speed variable gas load, can effectively avoid resonant vibration generated by the impact of high-speed variable gas load so as to advantage long-term stable operation of tower, and simultaneously has the characteristics of small manufacturing and installation difficulty and low cost.

In conclusion, the gasoline fractionator of the invention can the technical index of long-term stable operation dramatically and achieves energy saving and efficiency improvement.

### Brief Description of Drawings

Figure 1 is a schematic diagram of the structural section of the embodiment of the gasoline fractionator.
Figure 2 is a schematic diagram of the cross section of the micro baffle.
Figure 3 is an "A"-direction view of the Figure 2.
Figure 4 is a schematic diagram of the arrangement state of the micro baffles.
Figure 5 is a schematic diagram of the local structure of the space truss.
Figure 6 is an "A"-direction view of the Figure 5.
Figure 7 is a schematic diagram of the local section of the trussed beam in Figure 1.
Figure 8 is an enlarged view of the "A-A" section of Figure 7.

The numbers in the figures are as below: 1 tower body, 2 pedestal, 3 foundation beam, 4 space truss, 4-1 pedestal, 4-2 space truss foundation beam, 4-3 pillar, 4-4 support base, 4-5 X-direction cross beam, 4-6 Y-direction cross beam, 5 micro baffle, 6 nozzle-type liquid distributor, 7 high-circulation oil collecting tank, 8 trussed beam, 8-1 pedestal, 8-2 lower parallel chord, 8-3 rectangular chord plate, 8-4 intermediate rectangular chord plate, 8-5 upper parallel chord, 8-6 intermediate parallel chord, 8-7 oblique rod, 8-8 vertical rod, 8-9 spacing rod, 8-10 connecting plate, 9 dual-flow tray and 10 three-dimensional compound guide-type inlet initial distributor.

### Detailed Description of Embodiments

Further description is made below to the invention with reference to the embodiments and the drawings thereof.

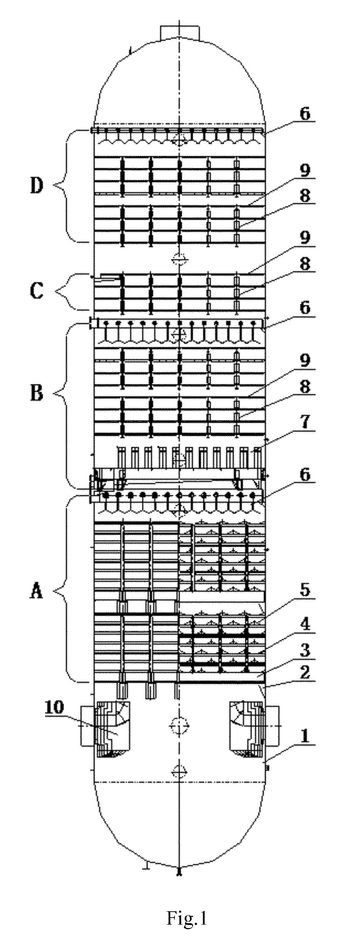

Shown as Figure 1, the gasoline fractionator of ethylene unit comprises a tower body 1 as well as an orifice and instruments thereof (not shown), the functional sections of the tower body sequentially are a quench oil circulation section A, a medium oil circulation section B, a diesel oil separation section C and a petroleum separation section D in an ascending direction. 10 to 16 layers of micro baffles 5 are arranged between nozzle-type liquid distributors 6 and three-dimensional compound guide-type inlet initial distributors 10 of the quench oil circulation section A, and in the embodiment shown as Figure 1,15 layers of the micro baffles 5 are arranged and supported by a space truss 4, and structural description is made below to the micro baffles 5 and the space truss 4 respectively.

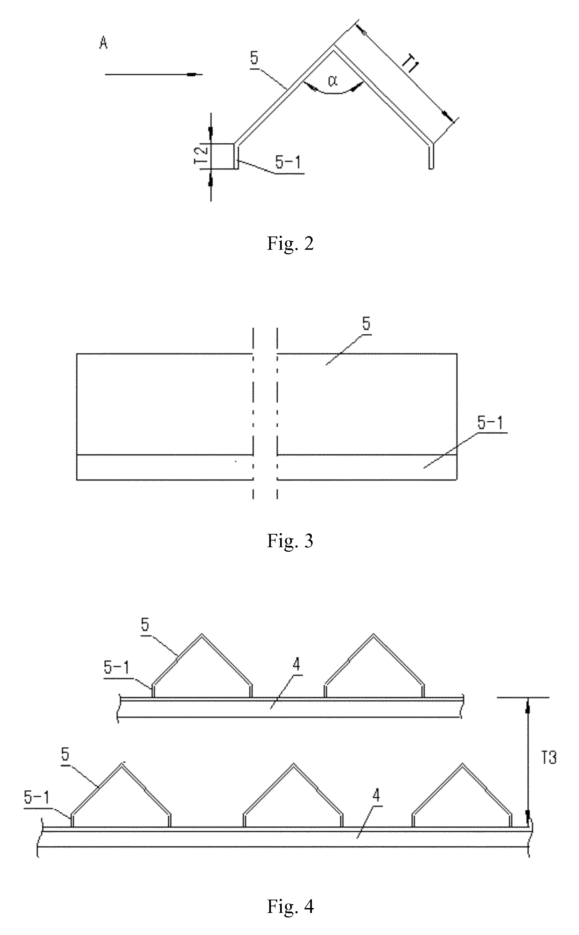

Shown as Figure 2, 3, a vertex angle α of the micro baffle 5 of the quench oil circulation section A ranges from 90 to 130 degrees, symmetrical vertical hems 5-1 are arranged at the tail ends of symmetrical bevel edges at two sides of the vertex angle, and the length T1 of the symmetrical bevel edges ranges from 80 to 200mm and the height T2 of the vertical hems 5-1 ranges from 10 to 40mm.

Shown as Figure 4, the micro baffles 5 in use are equidistantly arranged in parallel in the vertical direction and is supported on a support beam of the space truss 4, and the micro baffles arranged equidistantly have the free section rate of 50±5% and the interlayer spacing T3 ranging from 300 to 600mm.

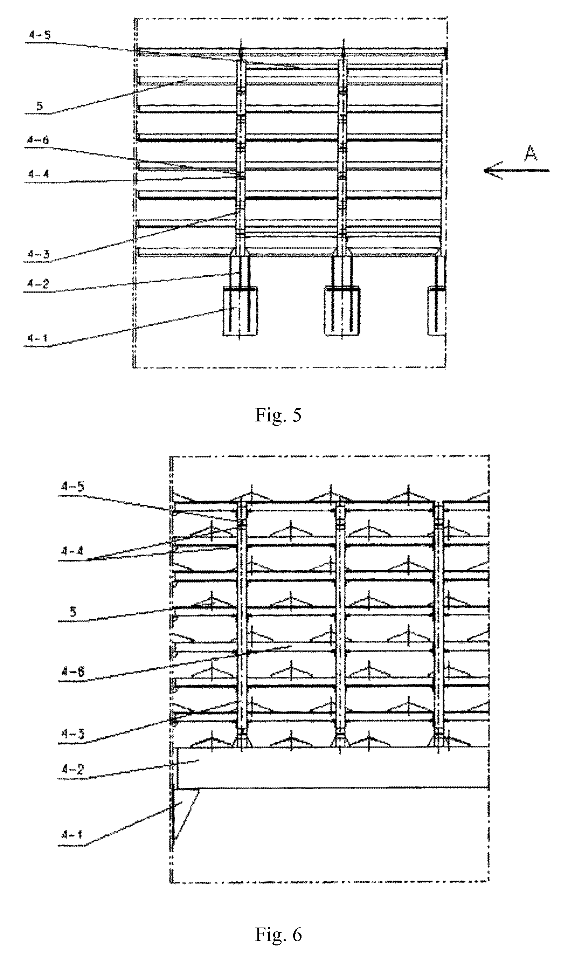

The space truss supporting the micro baffles in the embodiment 1 shown as Figure 1 is structurally shown as Figures 5 and 6, the space truss is provided with space truss foundation beams 4-2 supported by pedestals 4-1, and the space truss foundation beam may be fence beam, arc bridge beam or grille beam in the prior art. Pillars 4-3 formed by square tubes are distributed at intervals on the surface of the space truss foundation beam, both layering and horizontal support of X-direction cross beams 4-5 and Y-direction cross beams 4-6 are realized between the pillars and between the pillars on the periphery and the tower body 1, and two ends of the X-direction cross beams 4-5 and the Y-direction cross beams are fixedly connected with the corresponding pillars or support bases arranged in the tower body 1.

The Y-direction cross beams of the space truss shown as Figures 5 and 6 horizontally support 8 or 7 layers of the micro baffles 5.

8 to 10 layers of dual-flow trays, which are arranged in the vertical direction and have meshes with the diameter ranging from Φ18 to 24mm, are arranged between the nozzle-type liquid distributors 6 and the high-circulation oil collecting tanks 7 of the medium oil circulation section B, and 8 layers of the dual-flow trays, which have meshes with the diameter of Φ22mm are arranged in the embodiment shown as Figure 1.

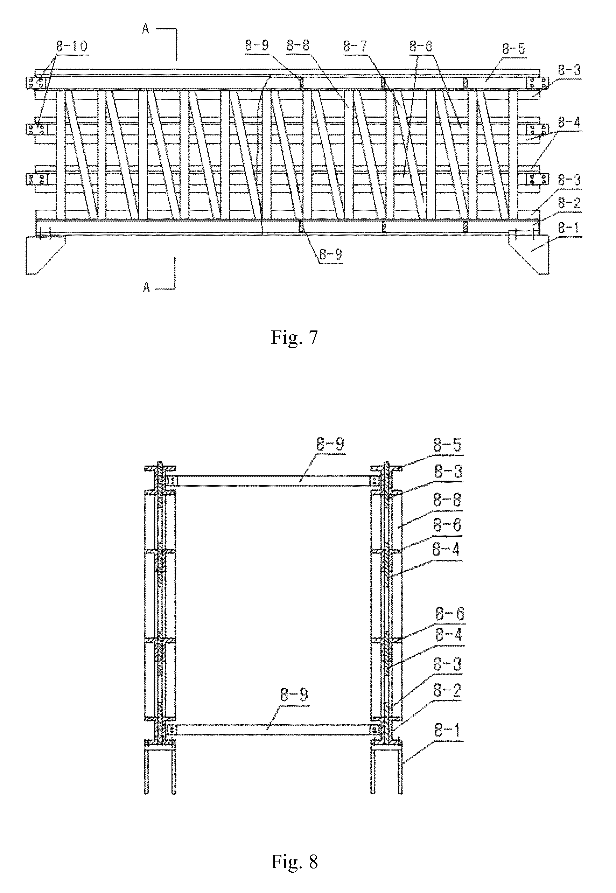

The dual-flow tray 9 in the embodiment shown as Figure 1 is supported by a one-bracket-supporting-four-tray trussed beam 8, structurally shown as Figures 7 and 8.

In Figures 7 and 8, the trussed beam 8 comprises side-by-side upper parallel chords 8-5, side-by-side lower parallel chords 8-2 (only two columns are shown in the figures), vertical rods 8-8 and oblique rods 8-7, spacing rods 8-9 which are respectively arranged between the side-by-side upper parallel chords and between the lower parallel chords as well as which connect the upper parallel chords with the lower parallel chords and define the spacing, and connecting plates 8-10 which are respectively used for the bodies of the upper and lower parallel chords.

The trussed beam of the invention is respectively provided with two intermediate parallel chords 8-6, parallel to the upper and lower parallel chords, between the side-by-side upper and lower parallel chords, and the side-by-side intermediate parallel chords of the trussed beam are symmetrically positioned.

In Figures 7 and 8, the upper parallel chord 8-5 and the lower parallel chord 8-2 are composed of symmetrical channel steels jointed side by side, and a rectangular chord plate 8-3 is clamped between the symmetrical channel steels by means of welding-type fixation. The intermediate parallel chord 8-6 is composed of symmetrical angle steels jointed side by side, and a intermediate rectangular chord plate 8-4 is clamped between the symmetrical angle steels by means of welding-type fixation. In addition, the intermediate parallel chords 8-6 are also provided with the connecting plates 10 for the connection with the bodies.

The side-by-side upper and lower parallel chords and the middle parallel chords of the trussed beam can horizontally support 4 layers of the dual-flow trays, therefore, two sets of the trussed beam are arranged in the embodiment shown as Figure 1 in order to support 8 layers of the dual-flow trays.

The bottom end of the one-bracket-supporting-four-tray trussed beam shown as Figures 7 and 8 is respectively provided with pedestals 8-1 (omitted in Figure 1).

The diesel oil separation section C of the invention is provided with 3 to 5 layers of the dual-flow trays, which are arranged in the vertical direction and have meshes with the diameter ranging from Φ13 to 24mm, and in the embodiment shown as Figure 1, 4 layers of the dual-flow trays 9, which are arranged in the vertical direction and have meshes with the diameter of Φ24mm, are arranged. The dual-flow trays 9 are supported by a one-bracket-supporting-four-tray trussed beam 8.

The dual-flow trays, which are arranged in the vertical direction and have meshes with the diameter ranging from Φ13 to 18mm, are arranged below the nozzle-type liquid distributors 6 of the petroleum separation section D of the invention, and in the embodiment shown as

Figure 1, 8 layers of the dual-flow trays 9, which are arranged in the vertical direction and have meshes with the diameter of Φ14mm, are arranged. The dual-flow trays 9 are supported by two sets of the one-bracket-supporting-four-tray trussed beam 8.

In the embodiment shown as Figure 1, the percentages of open area of the medium oil circulation section B, the diesel oil separation section C and the petroleum separation section D respectively are 20%, 18% and 18%.

## Claims

1. A dual-flow-baffle compound gasoline fractionator of ethylene unit, comprising a tower body as well as an orifice and instruments thereof, the functional sections of the tower body being a quench oil circulation section comprising nozzle-type liquid distributors and three-dimensional compound guide-type inlet initial distributors, a medium oil circulation section comprising nozzle-type liquid distributors and high-circulation oil collecting tanks, a diesel oil separation section, and a petroleum separation section comprising nozzle-type liquid distributors, **characterized in that**: micro baffles, which are arranged in parallel in the vertical direction at intervals, are arranged between the nozzle-type liquid distributors and the three-dimensional compound guide-type inlet initial distributors of the quench oil circulation section, a vertex angle of the micro baffle ranges from 90 to 139 degrees, symmetrical bevel edges at two sides of the vertex angle of the micro baffle are provided with symmetrical vertical hems, the length of the symmetrical bevel edges ranges from 80 to 200mm and the length of the vertical hems ranges from 10 to 40mm; dual-flow trays, which are arranged in the vertical direction and have meshes with the diameter ranging from Φ18 to 24mm, are arranged between the nozzle-type liquid distributors and the high-circulation oil collecting tanks of the medium oil circulation section; dual-flow trays, which are arranged in the vertical direction and have meshes with the diameter ranging from Φ13 to 24mm, are arranged on the diesel oil separation section; and dual-flow trays, which are arranged in the vertical direction and have meshes with the diameter ranging from Φ13 to 18mm, are arranged below the nozzle-type liquid distributors of the petroleum separation section.

2. The gasoline fractionator according to claim 1, **characterized in that**: the micro baffles arranged equidistantly have the free section rate of 50±5% and the interlayer spacing ranging from 300 to 600mm.

3. The gasoline fractionator according to claim 1, **characterized in that**: the quench oil circulation section is provided with 10 to 16 layers of micro baffles which are arranged in parallel in the vertical direction at intervals.

4. The gasoline fractionator according to claim 1, **characterized in that**: the micro baffles are supported by a space truss, the space truss is provided with a foundation beam on which pillars are distributed at intervals, both layering and horizontal support of X-direction cross beams and Y-direction cross beams are realized between the pillars and between the pillars on the periphery and the tower body, and the Y-direction cross beams of all layers horizontally support the micro baffles.

5. The gasoline fractionator according to claim 1, **characterized in that**: the percentage of open area of the dual-flow tray is from 15 to 30%.

6. The gasoline fractionator according to claim 1, **characterized in that**: 8 to 10 layers of the dual-flow trays of the medium oil circulation section are arranged in the vertical direction.

7. The gasoline fractionator according to claim 1, **characterized in that**: 3 to 5 layers of the dual-flow trays of the diesel oil separation section are arranged in the vertical direction.

8. The gasoline fractionator according to claim 1, **characterized in that**: 7 to 10 layers of the dual-flow trays of the gasoline separation section are arranged in the vertical direction.

9. The gasoline fractionator according to claim 1, **characterized in that**: the dual-flow trays arranged in the vertical direction are supported by a one-bracket-supporting-multi-tray trussed beam, a middle parallel chord parallel to an upper parallel chord and a lower parallel chord is arranged between the upper parallel chord and the lower parallel chord which are both parallel to the trussed beam, and the parallel middle parallel chords are positioned symmetrically; the upper and lower parallel chords and the middle parallel chords are composed of symmetrical section steels jointed side by side, rectangular chord plates are respectively fixedly clamped between the section steels jointed side by side, a vertical rod and an oblique rod are fixedly welded at two sides of the rectangular chord plate respectively, and the parallel upper and lower parallel chords and the middle parallel chords horizontally support the dual-flow trays respectively.
